## Europäisches Patentamt
## European Patent Office
## Office européen des brevets

(11) Numéro de publication: **0 166 491**
A2

(12) **DEMANDE DE BREVET EUROPEEN**

(21) Numéro de dépôt: **85201011.5**

(22) Date de dépôt: **24.06.85**

(51) Int. Cl.⁴: **C 08 B 31/12,** C 11 D 3/22

(30) Priorité: **27.06.84 LU 85435**

(43) Date de publication de la demande: **02.01.86**
**Bulletin 86/1**

(84) Etats contractants désignés: **AT BE CH DE FR GB IT LI NL SE**

(71) Demandeur: **Graanderivaten Raffinaderijen Amylum, en abrégé "G.R. Amylum", auparavant Glucoseries réunies, Place Jamblinne de Meux 33, B-1040 Bruxelles (BE)**

(72) Inventeur: **Lambrechts, Peter Frans Theofiel, Nattehofstraat 51, B-2800 Mechelen (BE)**

(74) Mandataire: **De Rycker, Rudolf, Ir. et al, Vereenigde Octrooibureaux Belgie S.A. Charlottalei 48, B-2018 Antwerpen (BE)**

(54) **Procédé de préparation d'un carboxyméthylamidon, et produit de lavage contenant un tel carboxyméthylamidon.**

(57) On prépare un carboxyméthylamidon présentant de bonnes propriétés anti-reprécipitation utilisable comme agent anti-reprécipitation dans des produits de lavage comme suit: On fait réagir un amidon oxydé possédant une fluidité alcaline de 20 à 50 ml avec un alcali et un sel de métal alcalin de l'acide chloracétique. On effectue cette réaction dans un milieu alcalin sur des cylindres rotatifs. On exécute la carboxyméthylation jusqu'à un degré de substitution entre 0,05 et 0,2.

- 1 -

"Procédé de préparation d'un carboxyméthylamidon,
et produit de lavage contenant un tel carboxyméthylamidon".

La présente invention est relative à un procédé
de préparation d'un carboxyméthylamidon présentant de bonnes
propriétés anti-reprécipitation,utilisable comme agent
anti-reprécipitation dans des produits de lavage, selon
lequel on fait réagir un amidon avec un alcali et un
sel de métal alcalin de l'acide chloracétique.

Par "produits de lavage" il faut entendre aussi
bien les produits de lavage en poudre,tels que les poudres
à laver les matières textiles et les poudres à laver la
vaisselle, que les produits de lavage liquides.

Etant donné que les détergents synthétiques ne
sont pas capables de tenir la souillure en suspension
ou d'éviter la reprécipitation de la souillure, les
produits de lavage modernes contiennent le plus souvent
également des agents anti-reprécipitation,c'est-à-dire
des agents ayant la propriété de maintenir la souillure
en suspension et d'empêcher qu'elle se redépose sur les
fibres lavées.

La carboxyméthylcellulose est ainsi fréquemment
ajoutée au produit de lavage comme agent anti-reprécipitation.

On pourrait supposer que l'amidon modifié d'une
façon similaire que la cellulose présente les mêmes propriétés anti-reprécipitation que la carboxyméthylcellulose. Or, en réalité le pouvoir anti-reprécipitation du carboxyméthylamidon préparé de façon habituelle, c'est-à-dire par dissolution de l'amidon dans un excès d'un alcali aqueux suivie de la mise en réaction de la solution obtenue avec du chloracétate de sodium, est très limité.

Ainsi il a été constaté que le carboxyméthylamidon obtenu selon le brevet suisse no. 276.408, c'est-à-dire par la réaction classique de l'amidon avec un alcali aqueux et du chloracétate de sodium exécutée dans une quantité limitée d'eau et en chauffant le mélange réactionnel sur des cylindres rotatifs au-dessus de 100°C, ne présente pas les propriétés anti-reprécipitation requises pour pouvoir être utilisé en tant qu'agent anti-reprécipitation dans des produits de lavage.

Les procédés de préparation du carboxyméthylamidon connus mentionnés ci-avant ne sont donc pas des procédés du genre auquel a trait cette demande.

Il existe par contre un procédé connu pour préparer du carboxyméthylamidon possédant de bonnes propriétés anti-reprécipitation et étant donc utilisable en tant qu'agent anti-reprécipitation dans des produits de lavage. Selon ce procédé connu, décrit dans le brevet belge no. no. 782.282, l'amidon est mis en réaction avec le chloracétate de sodium et l'aclali non pas en milieu aqueux, mais en milieu alcoolique sensiblement anhydre, contenant de préférence moins de 20 % d'eau.

Contrairement à ce qui se passe dans les réactions en milieu aqueux susdites, dans la réaction en milieu alcoolique sensiblement anhydre la structure originale des grains d'amidon serait substantiellement conservée.

Ce dernier procédé connu présente cependant le désavantage de nécessiter l'utilisation d'un solvant fort inflammable et le plus souvent très toxique. En plus ce procédé ne permet pas une préparation de façon continue.

L'invention a pour but de remédier à ces inconvénients et de procurer un procédé de préparation d'un carboxyméthylamidon présentant de bonnes propriétés anti-reprécipitation, évitant l'utilisation de solvants inflammables et toxiques et pouvant facilement être exécuté d'une façon continue.

Dans ce but on part d'un amidon légèrement dégradé possédant une fluidité alcaline de 20 à 50 ml et on effectue la réaction dans un milieu alcalin aqueux.

La demanderesse a en effet trouvé, que,d'une manière surprenante, on peut effectuer la réaction susdite en milieu aqueux pour préparer un carboxyméthylamidon présentant de bonnes propriétés anti-reprécipitation,à condition qu'on parte d'un amidon légèrement dégradé au point de posséder une fluidité alcaline de 20 à 50 ml. Une réaction en milieu aqueux et donc ininflammable et non-toxique peut être facilement exécutée de manière continue sur des cylindres rotatifs comme selon le procédé décrit dans le brevet suisse no. 276.408.

La réaction d'amidon dégradé avec un alcali et un sel de métal acalin de l'acide chloracétique est connue en soi du brevet belge no. 789.685. Dans le procédé selon ce brevet on part cependant d'un amidon très dégradé et on exécute la carboxylation jusqu'à un degré de substitution fort élevé. Le produit fortement substitué ainsi obtenu ne possède pas de bonnes propriétés anti-reprécipitation. Il est utilisé comme "builder" dans des produits de lavage.

Dans une forme de réalisation avantageuse de l'invention, on part d'un amidon oxydé.

Dans une forme de réalisation efficace de l'invention, on exécute la carboxyméthylation jusqu'à un degré de substitution entre 0,05 et 0,2.

Dans le carboxyméthylamidon obtenu selon le procédé suivant la demande, la structure originale du grain est perdue, ce qui n'est pas le cas dans le carboxyméthylamidon présentant de bonnes propriétés anti-reprécipitation obtenu selon le procédé décrit dans le brevet belge no. 782.282.

L'invention a en outre trait à un produit de lavage, caractérisé en ce qu'il contient une quantité d'un carboxyméthylamidon préparé suivant l'une quelconque des formes de réalisation mentionnées ci-dessus.

Dans une forme de réalisation avantageuse , le produit de lavage contient entre 0,5 et 5 % en poids d'un tel carboxyméthylamidon.

D'autres particularités et avantages de l'invention ressortiront de la description d'un procéde de préparation d'un carboxyméthylamidon présentant de bonnes propriétés anti-reprécipitation et d'un   produit de lavage contenant un tel carboxyméthylamidon, selon l'invention; cette description n'est donnée ci-après qu'à titre d'exemple non limitatif.

Pour préparer un carboxyméthylamidon présentant de bonnes propriétés anti-reprécipitation,utilisable comme agent anti-reprécipitation dans des produits de lavage,on met un amidon légèrement dégradé en suspension dans de l'eau et on ajoute l'alcali et un sel de métal alcalin de l'acide chloracétique  nécessaires en remuant fortement.

On transfère la suspension visqueuse obtenue sur des cylindres rotatifs et on y chauffe la suspension jusqu'à une température de plus de 100°C. On obtient ainsi du carboxyméthylamidon  sec qu'on ajoute ensuite à un produit de lavage.

- 5 -

L'amidon peut avoir été dégradé de manière connue. L'amidon oxydé, par exemple à l'aide d'eau de javel, convient très bien pour la préparation du carboxyméthylamidon.

La source d'amidon peut être le maïs, le waxymaïs, l'amylomaïs, le froment, les pommes de terre, le riz, le tapioca, le sagou ou autre.

Afin d'obtenir de bonnes propriétés anti-reprécipitation l'amidon ne peut pas être trop fortement dégradé. Un amidon dégradé qui convient possède une fluidité alcaline de l'ordre de 20 à 50 ml, ce qui correspond dans le cas d'un amidon oxydé à 0,2 à 0,5 % de groupes carboxyl sur 100 grammes de matière sèche d'amidon.

La quantité d'alcali et de sel de métal alcalin de l'acide chloracétique est choisie de façon que le degré de substitution par U.A.G. (unité anhydroglucosyl) de l'amidon carboxyméthylé légèrement dégradé se situe entre 0,05 et 0,2. Un degré de substitution plus élevé nécessite des quantités d'alcali et de sel plus élevées ce qui augmente sensiblement les frais sans améliorer dans la même mesure l'effet anti-reprécipitation.

Comme sel de métal alcalin de l'acide chloracétique on peut employer du chloracétate de sodium et comme alcali, on peut employer de la soude caustique.

La préparation du carboxyméthylamidon selon l'invention peut être exécutée de façon continue et ne nécessite pas de solvants inflammables et/ou toxiques. La durée de la réaction de l'amidon dégradé est limitée au temps de séjour de la suspension sur les cylindres rotatifs.

Le carboxyméthylamidon préparé selon l'invention possède des propriétés anti-reprécipitation comparables à celles du carboxyméthylamidon selon le brevet belge no. 782.282 et en tout cas nettement meilleures que celles du carboxyméthylamidon préparé de façon classique à partir d'amidon non dégradé.

On incorpore le carboxyméthylamidon préparé selon l'invention comme agent anti-reprécipitation dans des produits conventionnels de lavage dans une concentration qui peut se situer utilement entre 0,5 % et 5 % en poids, et plus économiquement entre 0,5 % et 2 %.

Les exemples suivants illustrent l'invention plus en détail.

Exemple 1.

10,5 % en poids de chloracétate de sodium et 3,8 % en poids de soude caustique sont ajoutés à une suspension d'amidon de 20 Bé à base de Mylbond S5 (fluidité alcaline = 36 ml, teneur en carboxyl = 0,3 %) - (Mylbond S5 est un amidon oxydé avec de l'hypochlorite , commercialisé par la déposante).

Les pourcentages sont calculés sur base de la matière sèche d'amidon.

Après dissolution et mélange des différents composants, le mélange est séché sur des cylindres rotatifs pour être ensuite moulu.

L'amidon ainsi obtenu est carboxyméthylé, jusqu'à un degré de substitution d'environ 0,1.

Essais comparatifs :

On compare les propriétés anti-reprécipitation du carboxyméthylamidon (CMA) préparé selon l'exemple 1 à celles du carboxyméthylcellulose (CMC) souvent employé comme agent anti-reprécipitation dans des produits à laver.

On prépare des liquides de lavage d'essai (IEC) à partir d'une poudre à laver ayant la composition suivante (tous les pourcentages sont en poids)

LAS (alkylsulfonate linéaire) 6,4 %

LAE (alkyléthoxylate linéaire)  2,3 %

savon 2,8 %

silicates 7,5 %

$Na_5P_3O_{10}$ 35,0 %

perborate de sodium 20,0 %

$Na_2SO_4$ 16,8 %

Agent anti-reprécipitation 1 %

Eau 8,2 %

A. Dans un premier liquide de lavage d'essai (IEC) l'agent anti-reprécipitation est du CMA selon l'invention.

Dans un deuxième liquide de lavage d'essai (IEC) l'agent anti-reprécipitation est du CMC.

On soumet deux bandes d'essai à un lavage dans un Launderomètre avec respectivement ces deux lessives d'essai comme suit :

Bandes d'essai : 1. tissu blanc de coton témoin,non souillé (ISO 2267)

2. tissu test fabrics coton partiellement souillé (TF)

Température : 60°C

Durée : 30 minutes

L'eau : eau du robinet avec une dureté de 30° Fr.

Rinçages : 3 à l'eau du robinet

Essorage et séchage pendant 10 min.

Avant et après le lavage, on mesure la réflectance des tissus témoins à l'aide d'un réflectomètre.

La différence en réflectance donne le grisonnement.

Diminution de la réflectance :

| Agent anti-reprécipitation | Conc. du détergent | coton témoin | coton test-fabric |
|---|---|---|---|
| CMA selon l'invention | 5 g/l<br>10 g/l<br>10 g/l +<br>0,1 g/l de<br>carbon black | 6,4<br>4,6<br>8,2 | 2,2<br>0,6<br>— |
| CMC | 5 g/l<br>10 g/l<br>10 g/l +<br>0,1 g/l de<br>carbon black | 6,0<br>3,9<br>7,3 | 1,2<br>0,4<br>— |

B. On prépare deux liquides d'essai de la manière décrite sous A. mais à partir d'un produit de lavage comprenant 2 % en poids d'agent anti-reprécipitation (CMA selon l'invention respectivement CMC) et 7,2 % en poids d'eau. On lave des tissus blancs non souillés avec ces deux lessives :

14 tissus en coton

14 tissus en tergal

14 tissus en peluche (serviettes)

Avant le lavage on divise chaque tissu en deux moitiés et on les numérote. On lave une moitié avec le liquide de lavage d'essai contenant du CMA selon l'invention et l'autre moitié avec le liquide de lavage contenant du CMC et après un nombre de lavages on compare ces moitiés.

7 des 14 tissus divisés sont evalués après 6 lavages, les autres 7 après 12 lavages.

L'évaluation du grisonnement est faite visuellement,

ce facteur étant déterminant pour l'évaluation des résultats obtenus avec une formule de détergents.

Un groupe de 10 personnes émet son avis subjectif après observation des échantillons sous de la lumière blanche standard et de la lumière noire standard avec un haut pourcentage d'U.V. .

La moyenne est calculée en partant de la valeur des jugements portés.

Le tableau ci-dessous présente l'échelle des valeurs :

    0 : pas de différence
    1 : une petite différence
    2 : une différence évidente
    3 : une différence importante
    4 : une différence très importante

Lors d'un signe (-),les résultats se présentent en faveur de CMC, et

lors d'un signe (+), en faveur de CMA selon l'invention.

| Eau | conc. détergents | t° | coton 6      12 cycles | tergal 6      12 cycles | serviettes (peluche) 6          12 cycles |
|-----|------------------|-----|------------------------|--------------------------|-------------------------------------------|
| douce | 6 g/l | 40°C | -0,36   - 0,07 | -1,00  -0,79 | +0,21.   +0,28 |
| dure | 10 g/l | 40°C | -0,14   - 0,43 | -0,78  -0,71 | +0,57    +0,12 |

Il apparaît que les résultats obtenus avec l'amidon selon l'invention,diffèrent peu des agents anti-reprécipitation classiques.

Les différences varient entre -1 et + 0,57 ce qui donne peu de différence visuelle entre le CMA selon l'invention et le CMC.

- 10 -

3. On répète l'essai décrit ci-devant mais avant le lavage on met les tissus pendant 15 à 20 minutes dans une solution contenant une quantité de souillure standard.

| eau | concentr. détergents | t° | salissure | coton 6      12 cycles | | tergal 6      12 cyles | | serviettes (peluche) 6      12 cycles | |
|---|---|---|---|---|---|---|---|---|---|
| douce | 6 g/l | 40°C | 50 ml | -0,14 | -0,43 | +1,22 | +1,36 | +0,93 | +0,72 |
| dure | 10 g/l | 40°C | 60 ml | -0,64 | -1,14 | +0,07 | +0,71 | +0,79 | +1,07 |

Le CMA selon l'invention présente aussi dans ces circonstances des propriétés favorables en comparaison avec le CMC. Il apparaît qu'il existe un léger avantage pour les tissus contenants des synthétiques.

Exemples 2 à 4.

On prépare des carboxyméthylamidons de la manière décrite dans l'exemple 1 mais en partant d'amidons qu'on a oxydés avec de l'hypochlorite jusqu'à différentes fluidités alcalines, indiquées ci-après.

| exemple | 2 | 3 | 4 |
|---|---|---|---|
| fluidité alcaline en ml | 5 | 36 | 66 |

Le degré de substitution est dans tous ces exemples également d'environ 0,1.

Seul l'exemple 3 est selon l'invention.

Quatre liquides de lavage d'essai sont préparées à partir de la poudre à laver des essais A de l'exemple 1, mais dans lequel l'agent anti-reprécipitation est respectivement le CMC et les carboxyméthylamidons des exemples 2 à 4. Un cinquième liquide de lavage d'essai est préparé à partir de la poudre à laver susdit mais dans lequel l'agent anti-reprécipitation a été remplacé par de l'eau.

Chaque liquide de lavage comprend 10 g de poudre à laver par litre d'eau.

Des cotons témoins non-souillés (ISO 2267) ont été soumis à 10 lavages de 20 minutes à 90°C dans un appareil de lavage "Linitest" avec chacun des liquides de lavage susdits après addition de 25 mg/l de charbon actif au liquide.

Le rapport de flotte (poids de coton/poids du liquide de lavage) est de 1/80.

Après chaque lavage on rince les cotons témoins trois fois sous l'eau froide et on sèche les cotons à l'air.

Après les 10 lavages on mesure la diminution de la réflectance des cotons témoins à l'aide d'un spectrophotomètre du type "Hunterlab", sous la lumière,filtrée par un filtre infra-rouge,d'une lampe halogène.

La réflectance est une mesure pour le pouvoir anti-reprécipitation du CMC et des différents amidons.

Le coton témoin (ISO 2267) présente avant lavage une réflectance de 92,0 (moyenne de 10 mesures).

Après 10 lavages avec un liquide à laver les réflectances suivantes ont été mesurées (moyennes de 10 mesures)

| agent anti-reprécipitation dans le liquide à laver | réflectance |
|---|---|
| aucun | 83,4 |
| CMC | 85,8 |
| CMA de l'exemple 2 | 83,7 |
| CMA de l'exemple 3 | 85,4 |
| CMA de l'exemple 4 | 83,9 |

Il ressort de ces essais que le CMA selon l'invention (l'exemple 3) est comparable au CMC tandis que

0166491

- 12 -

les CMA ayant une fluidité alcaline trop basse ou trop élevée ne donnent pas de résultats acceptables.

Il doit être entendu que l'invention n'est nullement limitée aux formes d'exécution décrites ci-avant et que bien des modifications peuvent y être apportées sans sortir du cadre de la présente invention.

- 13 -

REVENDICATIONS

1. Procédé de préparation d'un carboxyméthylamidon présentant de bonnes propriétés anti-reprécipitation utilisable comme agent anti-reprécipitation dans des produits de lavage,selon lequel on fait réagir un amidon avec un alcali et un sel de métal alcalin de l'acide chloracétique, caractérisé en ce qu'on part d'un amidon légèrement dégradé possédant une fluidité alcaline de 20 à 50 ml et qu'on effectue la réaction dans un milieu alcalin aqueux.

2. Procédé selon la revendication 1,caractérisé en ce qu'on part d'un amidon oxydé.

3. Procédé selon l'une quelconque des revendications 1 et 2, caractérisé en ce qu'on exécute la carboxyméthylation jusqu'à un degré de substitution entre 0,05 et 0,2.

4. Procédé selon l'une quelconque des revendications 1 à 3, caractérisé en ce qu'on exécute la réaction sur des cylindres rotatifs.

5. Produit de lavage,caractérisé en ce qu'il contient une quantité d'un carboxyméthylamidon préparé suivant l'une quelconque des revendications 1 à 4.

6. Produit de lavage suivant la revendication 5, caractérisé en ce qu'il contient entre 0,5 et 5 % en poids d'un carboxyméthylamidon préparé suivant le procédé selon l'une quelconque des revendications 1 à 4.